# EUROPEAN PATENT APPLICATION

(11) **EP 4 328 264 A1**
(43) Date of publication of application: **28.02.2024**
(21) Application number: 22791798.6
(22) Date of filing: 21.04.2022
(51) Int. Cl.: C08L 9/00, B60C 1/00, C08F 212/02, C08L 25/02

(54) **RUBBER COMPOSITION, AND RUBBER CROSSLINKED PRODUCT AND PNEUMATIC TIRE USING SAID RUBBER COMPOSITION**

(30) Priority: 21.04.2021 JP 2021071731
(71) Applicant: Zeon Corporation, Tokyo 100-8246 (JP)
(72) Inventor: NOZAWA, Atsushi, Tokyo 100-8246 (JP)
(74) Representative: Kraus & Lederer PartGmbB
(86) International application number: PCT/JP2022/018478
(87) International publication number: WO 2022/225027

(57) **Abstract**

Provided is a rubber composition comprising a diene-based rubber and a hydrocarbon resin, wherein the content of the hydrocarbon resin is 1 to 200 parts by mass relative to 100 parts by mass of the diene-based rubber, the hydrocarbon resin comprises aliphatic monomer units, or aliphatic monomer units and aromatic monomer units, and has a number average molecular weight (Mn) in the range of 400 to 3000, a weight average molecular weight (Mw) in the range of 700 to 6000, a Z-average molecular weight (Mz) in the range of 1500 to 20000, a ratio (Mw/Mn) of the weight average molecular weight to the number average molecular weight in the range of 1.0 to 4.0, a ratio (Mz/Mw) of the Z-average molecular weight to the weight average molecular weight in the range of 1.0 to 3.5, a ratio (Mp/Mw) of a peak-top molecular weight (Mp) to the weight average molecular weight (Mw) in the range of 0.4 to 0.8, and a softening temperature in the range of 80 to 150°C.

## Description

### TECHNICAL FIELD

The present invention relates to a rubber composition, and more specifically relates to a rubber composition that can provide a rubber crosslinked product ensuring an excellent balance of rolling resistance, wet grip performance, and low-temperature performance.

### BACKGROUND ART

In recent years, with regard to tires for automobiles, improving, for example, wet grip property has been demanded from the viewpoint of safety while high fuel efficiency is strongly required due to environmental and resource problems. A crosslinked product of a rubber composition in which silica is blended as a filler to a rubber component has a smaller rolling resistance when constituting a tire, compared with a crosslinked product of a rubber composition in which carbon black is blended. For this reason, by constituting tires using a crosslinked product of a rubber composition containing silica, it is possible to obtain tires excellent in fuel efficiency.

However, when silica is blended into a conventional rubber component, due to insufficient affinity and resulting easy separation of the rubber component and silica, the rubber crosslinked product obtained by crosslinking the rubber component and silica has insufficient rolling resistance and low-temperature performance when constituting tires.

For example, Patent Document 1 discloses blending of a specific amount of a softening agent having a specific structure as well as a specific amount of a hydrocarbon resin having a specific structure into a rubber component for the purpose of improving rolling resistance and wet grip performance of a tire.

### RELATED ART DOCUMENTS

### PATENT DOCUMENTS

Patent Document 1: JP 2010-241965 A

### SUMMARY OF INVENTION

### PROBLEM TO BE SOLVED BY THE INVENTION

According to the softening agent and the hydrocarbon resin having a specific structure described in Patent Document 1, it is possible to improve both rolling resistance and wet grip performance to a certain extent when a tire is manufactured by using the rubber composition obtained by adding the softening agent and the hydrocarbon resin. However, further improvement of rolling resistance and wet grip performance has been required from the viewpoint of further improvement in safety and fuel efficiency; in addition, superior low-temperature performance has also been required.

The present invention has been made in consideration of such circumstances, and an objective of the present invention is to provide a rubber composition that can provide a rubber crosslinked product ensuring an excellent balance of rolling resistance, wet grip performance, and low-temperature performance.

### MEANS FOR SOLVING THE PROBLEMS

As a result of extensive studies to achieve the above objective, the present inventors have found that the above objective can be achieved by a rubber composition in which a specific hydrocarbon resin is blended with a diene-based rubber, more specifically, a rubber composition containing a hydrocarbon resin having specific ranges of a number average molecular weight (Mn), a weight average molecular weight (Mw), a Z-average molecular weight (Mz), a ratio (Mw/Mn) of the weight average molecular weight to the number average molecular weight, a ratio (Mz/Mw) of the Z-average molecular weight to the weight average molecular weight, and a softening point, and also having a ratio (Mp/Mw) of a peak-top molecular weight (Mp) to the weight average molecular weight (Mw) that is controlled within a range of 0.4 to 0.8. With this finding, the present inventors completed the present invention.

Specifically, the present invention provides a rubber composition comprising a diene-based rubber and a hydrocarbon resin,
wherein the content of the hydrocarbon resin is 1 to 200 parts by mass relative to 100 parts by mass of the diene-based rubber,
wherein the hydrocarbon resin comprises
aliphatic monomer units, or aliphatic monomer units and aromatic monomer units, and has
a number average molecular weight (Mn) in the range of 400 to 3000,
a weight average molecular weight (Mw) in the range of 700 to 6000,
a Z-average molecular weight (Mz) in the range of 1500 to 20000,
a ratio (Mw/Mn) of the weight average molecular weight to the number average molecular weight in the range of 1.0 to 4.0,
a ratio (Mz/Mw) of the Z-average molecular weight to the weight average molecular weight in the range of 1.0 to 3.5,
a ratio (Mp/Mw) of a peak-top molecular weight (Mp) to the weight average molecular weight (Mw) in the range of 0.4 to 0.8, and
a softening temperature in the range of 80 to 150°C.

In the rubber composition according to the present invention, the hydrocarbon resin preferably comprises
1 to 70% by mass of 1,3-pentadiene monomer units,
1 to 30% by mass of C₄ to C₆ alicyclic monoolefin monomer units,
0 to 15% by mass of isoprene monomer units,
0 to 50% by mass of C₄ to C₈ acyclic monoolefin monomer units,
0 to 10% by mass of alicyclic diolefin monomer units, and
0 to 40% by mass of aromatic monoolefin monomer units.

In the rubber composition according to the present invention, the hydrocarbon resin is preferably a hydride.

The rubber composition according to the present invention preferably further comprises a filler.

The rubber composition according to the present invention preferably further comprises a crosslinking agent.

The rubber composition according to the present invention preferably comprises a styrene-butadiene copolymer rubber or a butadiene rubber as the diene-based rubber.

Further, the present invention provides a rubber crosslinked product formed by crosslinking of the rubber composition described above.

Further, the present invention provides a pneumatic tire comprising a tread formed from the rubber composition described above or the rubber crosslinked product described above.

### EFFECTS OF THE INVENTION

The present invention provides a rubber composition that can provide a rubber crosslinked product ensuring an excellent balance of rolling resistance, wet grip performance, and low-temperature performance.

### DESCRIPTION OF EMBODIMENTS

The rubber composition according to the present invention is a rubber composition comprising a diene-based rubber and a hydrocarbon resin,
wherein the content of the hydrocarbon resin is 1 to 200 parts by mass relative to 100 parts by mass of the diene-based rubber.

Hereinafter, each of components of the rubber composition according to the present invention will be described.

### <Hydrocarbon Resin>

The hydrocarbon resin used in the present invention is a hydrocarbon resin comprising
aliphatic monomer units, or aliphatic monomer units and aromatic monomer units, and having
a number average molecular weight (Mn) in the range of 400 to 3000,
a weight average molecular weight (Mw) in the range of 700 to 6000,
a Z-average molecular weight (Mz) in the range of 1500 to 20000,
a ratio (Mw/Mn) of the weight average molecular weight to the number average molecular weight in the range of 1.0 to 4.0,
a ratio (Mz/Mw) of the Z-average molecular weight to the weight average molecular weight in the range of 1.0 to 3.5,
a ratio (Mp/Mw) of a peak-top molecular weight (Mp) to the weight average molecular weight (Mw) in the range of 0.4 to 0.8, and
a softening temperature in the range of 80 to 150°C.

The hydrocarbon resin used in the present invention may be any one containing at least aliphatic monomer units, or one containing aromatic monomer units in addition to the aliphatic monomer units.

### (Aliphatic monomer units)

First, the aliphatic monomer units contained in the hydrocarbon resin used in the present invention will be described below.

An aliphatic monomer may be used as an aliphatic monomer for forming aliphatic monomer units as long as it contains no aromatic ring and contains at least an unsaturated hydrocarbon. Examples of such an aliphatic monomer include 1,3-pentadiene, C₄ to C₆ alicyclic monoolefin monomers, isoprene, C₄ to C₈ acyclic monoolefin monomers, alicyclic diolefin monomers, and the like. Further, in the present invention, a mixture containing these aliphatic monomers may be added to a polymerization reaction system upon production of a hydrocarbon resin. At this time, the aliphatic monomer contained in the mixture is used as a component of a monomer unit constituting the hydrocarbon resin. To be noted, an addition-polymerizable component other than an aliphatic monomer contained in the mixture may also be used as a constituent component of a monomer unit of the hydrocarbon resin, and a non-addition polymerizable component may be used as a solvent at the time of polymerization. As a mixture containing an aliphatic monomer, for example, a C5 fraction containing, as an aliphatic monomer, 1,3-pentadiene, cyclopentene, isobutylene, and the like may be suitably used.

The hydrocarbon resin preferably contains 1,3-pentadiene monomer units and C₄ to C₆ alicyclic monoolefin monomer units as the aliphatic monomer units, and may further contain isoprene monomer units, C₄ to C₈ acyclic monoolefin monomer units, and alicyclic diolefin monomer units, in addition to these units.

The content of the 1,3-pentadiene monomer units in the hydrocarbon resin is preferably, but not particularly limited to, 1 to 70% by mass, more preferably 20 to 65% by mass, further preferably 30 to 60% by mass, particularly preferably 35 to 52% by mass. By controlling the content of 1,3-pentadiene monomer units within the above ranges, the rubber crosslinked product to be obtained has further superior rolling resistance, wet grip performance, and low-temperature performance. The cis/trans isomer ratio in 1,3-pentadiene may be any ratio, and is not particularly limited.

The C₄ to C₆ alicyclic monoolefins constituting C₄ to C₆ alicyclic monoolefin monomer units are hydrocarbon compounds having 4 to 6 carbon atoms and having a molecular structure including one ethylenically unsaturated bond and a non-aromatic ring structure. Specific examples of the C₄ to C₆ alicyclic monoolefins include cyclobutene, cyclopentene, cyclohexene, methylcyclobutene, methylcyclopentene, and the like.

The content of the C₄ to C₆ alicyclic monoolefin monomer units in the hydrocarbon resin is preferably, but not particularly limited to, 1 to 30% by mass, more preferably 5 to 25% by mass, further preferably 9 to 22% by mass, further more preferably 11 to 19% by mass, particularly preferably 13 to 17% by mass. By controlling the content of the C₄ to C₆ alicyclic monoolefin monomer units within the above range, the rubber crosslinked product to be obtained has further superior rolling resistance, wet grip performance, and low-temperature performance.

The ratios of compounds corresponding to the C₄ to C₆ alicyclic monoolefins are not particularly limited, and may be any ratios. However, at least cyclopentene is preferably contained, and the ratio of cyclopentene in the C₄ to C₆ alicyclic monoolefins is more preferably 50% by mass or more, further preferably 80% by mass or more, particularly preferably 100% by mass.

The hydrocarbon resin used in the present invention preferably contains isoprene monomer units. With the presence of isoprene monomer units, the wet grip performance of the rubber crosslinked product to be obtained can further be enhanced. The content of the isoprene monomer units in the hydrocarbon resin is preferably, but not particularly limited to, 0 to 15% by mass, more preferably 0.1 to 12% by mass, further preferably 0.15 to 10% by mass, further more preferably 0.2 to 9% by mass. By controlling the content of the isoprene monomer units within the above ranges, the wet grip performance of the rubber crosslinked product to be obtained can be more appropriately enhanced. From the viewpoint of further enhancing the wet grip performance of the rubber crosslinked product to be obtained, the content of the isoprene monomer units is particularly preferably 6 to 10% by mass. From the viewpoint of ensuring a further superior balance of rolling resistance, wet grip performance, and low-temperature performance of the rubber crosslinked product to be obtained, the content of the isoprene monomer units is particularly preferably 0.15 to 0.5% by mass.

The C₄ to C₈ acyclic monoolefins constituting C₄ to C₈ acyclic monoolefin monomer units are C₄ to C₈ chain hydrocarbon compounds having a molecular structure including one ethylenically unsaturated bond without a ring structure. Specific examples of the C₄ to C₈ acyclic monoolefins include butenes such as 1-butene, 2-butene, and isobutylene (2-methylpropene); pentenes such as 1-pentene, 2-pentene, 2-methyl-1-butene, 3-methyl-1-butene, and 2-methyl-2-butene; hexenes such as 1-hexene, 2-hexene, and 2-methyl-1-pentene; heptenes such as 1-heptene, 2-heptene, and 2-methyl-1-hexene; octenes such as 1-octene, 2-octene, 2-methyl-1-heptene, and diisobutylenes (2,4,4-trimethyl-1-pentene and 2,4,4-trimethyl-1-pentene); and the like.

The content of the C₄ to C₈ acyclic monoolefin monomer units in the hydrocarbon resin is preferably, but not particularly limited to, 0 to 50% by mass, more preferably 8 to 45% by mass, further preferably 10 to 40% by mass, particularly preferably 14 to 37% by mass. By controlling the content of the C₄ to C₈ acyclic monoolefin monomer units within the above ranges, the rubber crosslinked product to be obtained has further superior rolling resistance, wet grip performance, and low-temperature performance.

To be noted, the ratios of compounds (including an isomer) corresponding to the C₄ to C₈ acyclic monoolefins may be any ratio, and are not particularly limited. However, at least one kind selected from the group consisting of 2-methyl-2-butene, isobutylene, and diisobutylenes is preferably contained, and the ratio of the total amount of 2-methyl-2-butene, isobutylene, and diisobutylenes in the C₄ to C₈ acyclic monoolefin is more preferably 50% by mass or more.

The alicyclic diolefins constituting alicyclic diolefin monomer units are hydrocarbon compounds having a molecular structure including two or more ethylenically unsaturated bonds and a non-aromatic ring structure. Specific examples of the alicyclic diolefins include cyclopentadiene, multimers of cyclopentadiene such as dicyclopentadiene, methylcyclopentadiene, multimers of methylcyclopentadiene, and the like.

The content of the alicyclic diolefin monomer units in the hydrocarbon resin is preferably, but not particularly limited to, 0 to 10% by mass, more preferably 0.03 to 5% by mass, further preferably 0.05 to 4% by mass, particularly preferably 0.08 to 3% by mass. By controlling the content of the alicyclic diolefin monomer units within the above ranges, the rubber crosslinked product to be obtained has further superior rolling resistance, wet grip performance, and low-temperature performance.

The hydrocarbon resin according to the present invention may contain monomer units other than 1,3-pentadiene monomer units, C₄ to C₆ alicyclic monoolefin monomer units, isoprene monomer units, C₄ to C₈ acyclic monoolefin monomer units, and alicyclic diolefin monomer units.

The other monomers constituting such other monomer units are not particularly limited insofar as they are addition polymerizable compounds that can undergo addition copolymerization with 1,3-pentadiene and the like. Examples of such other monomers include C₄ to C₆ unsaturated hydrocarbons other than 1,3-pentadiene and isoprene, such as 1,3-butadiene, 1,2-butadiene, 1,3-hexadiene, and 1,4-pentadiene; alicyclic monoolefins with 7 or more carbon atoms, such as cycloheptene; acyclic monoolefins other than C₄ to C₈ acyclic monoolefins, such as ethylene, propylene, and nonene; and the like.

The content of the other monomer units in the hydrocarbon resin is usually in the range of 0 to 30% by mass, preferably 0 to 25% by mass, more preferably 0 to 20% by mass.

The content of the aliphatic monomer units in the hydrocarbon resin is preferably, but not particularly limited to, 50% by mass or more, more preferably 60% by mass or more, further preferably 70% by mass or more, particularly preferably 80% by mass or more. In particular, when the hydrocarbon resin contains aliphatic monomer units and aromatic monomer units, the content of the aliphatic monomer units is preferably, but not particularly limited to, 60% by mass or more, more preferably 63 to 90% by mass, further preferably 65 to 85% by mass, particularly preferably 68 to 81% by mass.

### (Aromatic monomer units)

The hydrocarbon resin used in the present invention may contain aromatic monomer units in addition to the aliphatic monomer units. By using a hydrocarbon resin that contains aromatic monomer units in addition to aliphatic monomer units, the rubber crosslinked product to be obtained has further superior rolling resistance and wet grip performance. The aromatic monomer for constituting aromatic monomer units may be any aromatic monomer that contains an aromatic ring and that is capable of copolymerization with the aliphatic monomer. Examples thereof include aromatic monoolefin monomer. Further, in the present invention, a mixture containing an aromatic monomer, such as an aromatic monoolefin monomer, may be added to a polymerization reaction system upon production of a hydrocarbon resin. At this time, the aromatic monomer contained in the mixture is used as a component of monomer units constituting the hydrocarbon resin. To be noted, an addition-polymerizable component other than the aromatic monomer contained in the mixture can also be used as a constituent component of monomer units of the hydrocarbon resin, and a non-addition polymerizable component can be used as a solvent at the time of polymerization. As the mixture containing the aromatic monomer, for example, a C9 fraction containing a styrene compound, an indene compound, and the like as the aromatic monomer can be suitably used.

The aromatic monoolefin monomer is an aromatic compound having a molecular structure with one ethylenically unsaturated bond. Specific examples of the aromatic monoolefin include styrene compounds such as styrene, α-methylstyrene, β-methylstyrene, and vinyltoluene; indene compounds such as indene and 1-methylindene; coumarone, and the like.

The content of the aromatic monoolefin monomer units in the hydrocarbon resin is preferably, but not particularly limited to, 0 to 40% by mass, more preferably 10 to 37% by mass, further preferably 15 to 35% by mass, particularly preferably 19 to 32% by mass. By controlling the content of the aromatic monoolefin monomer units within the above range, the rolling resistance and the wet grip performance of the rubber crosslinked product to be obtained can be more appropriately enhanced.

The number average molecular weight (Mn) of the hydrocarbon resin used in the present invention is in the range of 400 to 3000, preferably in the range of 500 to 2000, more preferably in the range of 700 to 1300, further preferably in the range of 800 to 1100. Further, the weight average molecular weight (Mw) of the hydrocarbon resin used in the present invention is in the range of 700 to 6000, preferably in the range of 1000 to 4000, more preferably in the range of 1400 to 3000, further preferably in the range of 1600 to 2500. The Z-average molecular weight (Mz) of the hydrocarbon resin used in the present invention is in the range of 1500 to 20000, preferably in the range of 2200 to 10000, more preferably in the range of 2700 to 6500, further preferably in the range of 3200 to 5700.

The ratio (Mw/Mn) of the weight average molecular weight to the number average molecular weight of the hydrocarbon resin used in the present invention is in the range of 1.0 to 4.0, preferably in the range of 1.2 to 3.2, more preferably in the range of 1.5 to 2.9, further preferably in the range of 1.7 to 2.6. Further, the ratio (Mz/Mw) of the Z-average molecular weight to the weight average molecular weight of the hydrocarbon resin used in the present invention is in the range of 1.0 to 3.5, preferably in the range of 1.2 to 3.2, more preferably in the range of 1.4 to 2.8, further preferably in the range of 1.6 to 2.5.

By controlling the number average molecular weight (Mn), the weight average molecular weight (Mw), the Z-average molecular weight (Mz), the ratio (Mw/Mn) of the weight average molecular weight to the number average molecular weight, and the ratio (Mz/Mw) of the Z-average molecular weight to the weight average molecular weight of the hydrocarbon resin within the above ranges, the rubber crosslinked product to be obtained has an excellent balance of rolling resistance, wet grip performance, and low-temperature performance.

The number average molecular weight (Mn), the weight average molecular weight (Mw), the Z-average molecular weight (Mz), the ratio (Mw/Mn) of the weight average molecular weight to the number average molecular weight, and the ratio (Mz/Mw) of the Z-average molecular weight to the weight average molecular weight of the hydrocarbon resin may be determined with polystyrene standards as a reference by gel permeation chromatography measurement using tetrahydrofuran as the developing solvent.

Further, in the present invention, in addition to control of the number average molecular weight (Mn), the weight average molecular weight (Mw), the Z-average molecular weight (Mz), the ratio (Mw/Mn) of the weight average molecular weight to the number average molecular weight, and the ratio (Mz/Mw) of the Z-average molecular weight to the weight average molecular weight of the hydrocarbon resin within the above ranges, the ratio (Mp/Mw) of the peak-top molecular weight (Mp) to the weight average molecular weight (Mw) of the hydrocarbon resin is set within the range of 0.4 to 0.8. In the present invention, a hydrocarbon resin in which the ratio (Mp/Mw) of the peak-top molecular weight (Mp) to the weight average molecular weight (Mw) falls within the range of 0.4 to 0.8 is used, and this hydrocarbon resin is blended with a diene-based rubber. The rubber composition thus may give a rubber crosslinked product with an excellent balance of rolling resistance, wet grip performance, and low-temperature performance. In particular, the present inventors conducted intensive study and found that, by using a hydrocarbon resin with a ratio (Mp/Mw) of the peak-top molecular weight (Mp) to the weight average molecular weight (Mw) in the range of 0.4 to 0.8, a relatively large amount of low molecular weight components was contained compared with those with the ratio (Mp/Mw) close to 1. As a result, it improves the wet grip performance and the low-temperature performance while maintaining desired rolling resistance, resulting in a good balance of rolling resistance, wet grip performance, and low-temperature performance.

If the ratio (Mp/Mw) of the peak-top molecular weight (Mp) to the weight average molecular weight (Mw) is excessively low, the rolling resistance decreases. On the other hand, if the ratio (Mp/Mw) of the peak-top molecular weight (Mp) to the weight average molecular weight (Mw) is excessively high, the wet grip performance and the low-temperature performance decrease. It is sufficient that the ratio (Mp/Mw) of the peak-top molecular weight (Mp) to the weight average molecular weight (Mw) is in the range of 0.4 to 0.8; however, the ratio (Mp/Mw) of the peak-top molecular weight (Mp) to the weight average molecular weight (Mw) is preferably in the range of 0.4 to 0.78, more preferably in the range of 0.41 to 0.75, further preferably in the range of 0.43 to 0.72, particularly preferably in the range of 0.47 to 0.67, most preferably in the range of 0.5 to 0.64. The peak-top molecular weight (Mp) of the hydrocarbon resin is preferably, but not particularly limited to, in the range of 500 to 4000, more preferably in the range of 700 to 2500, further preferably in the range of 1000 to 1500.

The ratio (Mp/Mw) of the peak-top molecular weight (Mp) to the weight average molecular weight (Mw) may be obtained by determining the weight average molecular weight (Mw) and the peak-top molecular weight (Mp) of the hydrocarbon resin with polystyrene standards as a reference by gel permeation chromatography measurement using tetrahydrofuran as the developing solvent, and determining the ratio (Mp/Mw) of these values. The peak-top molecular weight (Mp) is the molecular weight at which the detection value (elution amount) becomes maximum in the GPC chart obtained by the gel permeation chromatography measurement, and the ratio Mp/Mw represents the relation between such a peak-top molecular weight (Mp) at which the detection value (elution amount) becomes maximum, and the weight average molecular weight (Mw). The smaller the value of Mp/Mw, a relatively larger amount of low molecular weight components tends to be contained. The larger the value of Mp/Mw, a larger amount of high molecular weight components tends to be contained. When two or more peaks exist in the GPC chart, the molecular weight corresponding to the highest peak is used as the peak-top molecular weight (Mp).

In the present invention, the number average molecular weight (Mn), the weight average molecular weight (Mw), the Z-average molecular weight (Mz), the ratio (Mw/Mn) of the weight average molecular weight to the number average molecular weight, and the ratio (Mz/Mw) of the Z-average molecular weight to the weight average molecular weight of the hydrocarbon resin, and the ratio (Mp/Mw) of the peak-top molecular weight (Mp) to the weight average molecular weight (Mw) of the hydrocarbon resin can be adjusted by the types and the amounts of the monomers used in the polymerization and the polymerization condition. In particular, the ratio (Mp/Mw) of the peak-top molecular weight (Mp) to the weight average molecular weight (Mw) of the hydrocarbon resin can be controlled by a method of appropriately combining a method of adjusting the types and the amounts of the monomers used in the polymerization, a method of adjusting the amount of the polymerization catalyst to be used, a method of adjusting the polymerization temperature, and a method of adjusting the mixing temperature and the mixing time when the polymerization catalyst is mixed in a volatile solvent in advance. For example, the ratio (Mp/Mw) of the peak-top molecular weight (Mp) to the weight average molecular weight (Mw) of the hydrocarbon resin tends to be smaller as the amount of the used polymerization catalyst becomes larger or the polymerization temperature becomes higher. Further, the ratio (Mp/Mw) of the peak-top molecular weight (Mp) to the weight average molecular weight (Mw) of the hydrocarbon resin tends to be smaller as the mixing time for pre-mixing the polymerization catalyst in the volatile solvent becomes shorter.

Further, the softening point of the hydrocarbon resin used in the present invention is in the range of 80 to 150°C, preferably in the range of 85 to 145°C, more preferably in the range of 90 to 140°C, further preferably in the range of 90 to 115°C, particularly preferably in the range of 92 to 105°C. By controlling the softening point within the above range, the compatibility with the diene-based rubber can be enhanced, thereby appropriately enhancing the rolling resistance, the wet grip performance, and the low-temperature performance of the rubber crosslinked product to be obtained. The softening point of the hydrocarbon resin may be measured according to JIS K6863.

### <Method for producing hydrocarbon resin>

The method for producing the hydrocarbon resin used in the present invention is not particularly limited; however, examples thereof include a method performing addition polymerization of a monomer mixture for constituting a hydrocarbon resin. Preferable examples thereof include a method performing addition polymerization using a Friedel-Crafts cationic polymerization catalyst.

Examples of the Friedel-Crafts cationic polymerization catalysts include, but not particularly limited to, halides of aluminum, iron, tantalum, zirconium, tin, beryllium, boron, antimony, gallium, bismuth, molybdenum, and the like. Among these, aluminum halides such as aluminum chloride (AlCl₃) and aluminum bromide (AlBr₃) are preferable. The amount of the Friedel-Crafts cationic polymerization catalyst to be used is preferably 0.05 to 10 parts by mass, more preferably 0.1 to 5 parts by mass, further preferably 0.5 to 2.0 parts by mass, particularly preferably 0.7 to 1.7 parts by mass relative to 100 parts by mass of the monomer mixture used in the polymerization.

Further, in the polymerization, a halogenated hydrocarbon may also be used in combination with a Friedel-Crafts cationic polymerization catalyst from the viewpoint of increasing the catalytic activity.

Specific examples of the halogenated hydrocarbon include halogenated hydrocarbons having a halogen atom bonded to a tertiary carbon atom, such as t-butyl chloride, t-butyl bromide, 2-chloro-2-methylbutane, and triphenylmethyl chloride; halogenated hydrocarbons having a halogen atom bonded to a carbon atom adjacent to a carbon-carbon unsaturated bond, such as benzyl chloride, benzyl bromide, (1-chloroethyl)benzene, allyl chloride, 3-chloro-1-propyne, 3-chloro-1-butene, 3-chloro-1-butyne, and cinnamic chloride; and the like. Among these, preferred are t-butyl chloride and benzyl chloride because of their good balance between catalytic activity and handling properties. These halogenated hydrocarbons may be used alone or in combination. For the amount of the halogenated hydrocarbon, the molar ratio thereof to the Friedel-Crafts cationic polymerization catalyst is in the range of preferably 0.05 to 50, more preferably 0.1 to 10.

To more favorably control the polymerization reaction, it is preferred that the polymerization reaction be performed by adding a volatile solvent to the polymerization reaction system. Although any volatile solvent that does not inhibit the polymerization reaction can be used without limitation, a saturated aliphatic hydrocarbon or an aromatic hydrocarbon is suitable. Examples of the saturated aliphatic hydrocarbon include C₅ to C₁₀ chain saturated aliphatic hydrocarbons such as n-pentane, n-hexane, 2-methylpentane, 3-methylpentane, n-heptane, 2-methylhexane, 3-methylhexane, 3-ethylpentane, 2,2-dimethylpentane, 2,3-dimethylpentane, 2,4-dimethylpentane, 3,3-dimethylpentane, 2,2,3-trimethylbutane, and 2,2,4-trimethylpentane; C₅ to C₁₀ cyclic saturated aliphatic hydrocarbons such as cyclopentane, cyclohexane, cycloheptane, and cyclooctane; and the like. Examples of the aromatic hydrocarbon include C₆ to C₁₀ aromatic hydrocarbons such as benzene, toluene, and xylene; and the like. These volatile solvents may be used alone or in combination. Although not particularly limited, the amount of the volatile solvent to be used is preferably 10 to 1,000 parts by mass, more preferably 50 to 500 parts by mass relative to 100 parts by mass of the monomer mixture used in the polymerization.

In the polymerization reaction, the order of adding components of the polymerization catalyst and the monomer mixture to the polymerization reactor is not particularly limited, and they may be added in any order. However, from the viewpoint of desirable control of the polymerization reaction and control of the ratio (Mp/Mw) of the peak-top molecular weight (Mp) to the weight average molecular weight (Mw), preferred is a method in which the polymerization catalyst is added to and mixed with the volatile solvent in advance so as to disperse the polymerization catalyst in the volatile solvent, and then the monomer mixture is added thereto in the polymerization reactor to start the polymerization reaction.

When the polymerization catalyst is added to and mixed with the volatile solvent in advance, conditions are preferably set to cause aggregation or the like of the polymerization catalyst to partially remain in the volatile solvent. The mixing temperature is preferably 45 to 80°C, more preferably 50 to 70°C, and the mixing time is preferably 10 seconds to 4 minutes, more preferably 30 seconds to 3 minutes.

The polymerization temperature for the polymerization reaction is preferably, but not particularly limited to, 50 to 90°C, more preferably 55 to 85°C, further preferably 60 to 78°C. The polymerization reaction time may be appropriately selected, and is usually 10 minutes to 12 hours, preferably 30 minutes to 6 hours.

When a desired polymerization conversion ratio is attained, the polymerization reaction is terminated by adding a polymerization terminator, such as methanol, a sodium hydroxide aqueous solution, or an ammonia aqueous solution, to the polymerization reaction system. Thereby, a polymer solution containing a hydrocarbon resin can be prepared.

After the polymerization, a solvent-insoluble catalyst residue, which is generated when the polymerization catalyst is deactivated by adding a polymerization terminator, may be removed by filtration or the like.

Further, after the polymerization, it is preferable to remove volatile organic compound components, such as solvents, unreacted monomers, low molecular weight oligomer components, and the like, from the polymer solution containing the hydrocarbon resin by steam distillation or the like.

The obtained hydrocarbon resin may be made into a hydride as necessary by performing a hydrogenation reaction in which the carbon-carbon double bonds in the hydrocarbon resin are hydrogenated. In other words, the obtained hydrocarbon resin may be made into a hydrocarbon resin hydride.

The hydrogenation of the hydrocarbon resin may be performed by bringing the hydrocarbon resin into contact with hydrogen in the presence of a hydrogenation catalyst.

The hydrogenation catalyst is preferably, but not particularly limited to, a nickel catalyst. In particular, from the viewpoint of high reactivity, preferred is a catalyst containing, as the main component, a compound having an inorganic carrier compound as a carrier and nickel as a metal on the inorganic carrier compound. Specific examples of the inorganic carrier compound as a carrier include silica, alumina, boria, silica-alumina, diatomaceous earth, white clay, clay, magnesia, magnesia-silica (silica-magnesium oxide), titania, zirconia, and the like. Among these, preferred is magnesia-silica from the viewpoint of reactivity.

### <Diene-based rubber>

In addition to the hydrocarbon resin described above, the rubber composition according to the present invention contains a diene-based rubber. The diene-based rubber is not particularly limited insofar as it can be contained together with the hydrocarbon resin. Examples of such diene-based rubbers include diene-based rubbers described in JP 2015-189873 A, and more specifically, natural rubber (NR), isoprene rubber (IR), butadiene rubber (BR), styrene-butadiene copolymer rubber (SBR), ethylene-propylene-diene terpolymer (EPDM), and the like. Among these, styrene-butadiene copolymer rubber, butadiene rubber, and the like are preferable, and styrene-butadiene copolymer rubber is more preferable. The Mooney viscosity (ML1+4, 100°C) of the diene-based rubber is preferably, but not particularly limited to, 20 to 90, more preferably 30 to 80. If the diene-based rubber is an oil-extended rubber, the Mooney viscosity of the oil-extended rubber is preferably within the above ranges. The glass transition temperature (Tg) of the diene-based rubber is preferably, but not particularly limited to, -110°C to 20°C, more preferably -90°C to 0°C. By using the diene-based rubber described above, the rubber crosslinked product has a superior balance of rolling resistance, wet grip performance, and low-temperature performance. The diene-based rubber may be used alone or in combination.

Further, the diene-based rubber used in the present invention is not particularly limited in terms of its molecular weight and microstructure, and may be end-modified with an amine group, an amide group, a silyl group, an alkoxysilyl group, a carboxyl group, a hydroxyl group, or the like, or may be epoxidized. Further, the diene-based rubber used in the present invention may be hydrogenated, but is preferably not hydrogenated. When a diene-based rubber containing butadiene units, such as styrene-butadiene copolymer rubber or butadiene rubber, is used as a diene-based rubber, the content of the butadiene units in the diene-based rubber is preferably 30% by mass or more, more preferably 50% by mass or more. The vinyl bond content in the butadiene units is preferably, but not particularly limited to, 1 to 90%, more preferably 3 to 85%, further preferably 5 to 80%.

In the rubber composition according to the present invention, as the blending ratio of the diene-based rubber and the above hydrocarbon resin, the proportion of the hydrocarbon resin may be 1 to 200 parts by mass, preferably 1 to 70 parts by mass, more preferably 3 to 35 parts by mass, further preferably 15 to 25 parts by mass relative to 100 parts by mass of the diene-based rubber. If the amount of the hydrocarbon resin to be contained is excessively small, the rubber crosslinked product to be obtained will have inferior wet grip performance and low-temperature performance; on the other hand, if the amount of the hydrocarbon resin is excessively large, the rubber crosslinked product to be obtained will have inferior rolling resistance.

The rubber composition according to the present invention may be composed only of the diene-based rubber and the hydrocarbon resin, but may further contain other components. Examples of other components that may be contained in the rubber composition according to the present invention include a filler, a silane coupling agent, a crosslinking agent, a crosslinking accelerator, a crosslinking activator, an anti-aging agent, an antioxidant, an activator, a process oil, a plasticizer, a lubricant, a tackifier, and the like, and these other agents may be contained in the necessary amounts thereof.

As the filler which can be blended in the rubber composition according to the present invention, fillers generally used for rubber compositions can be used. Examples thereof include inorganic hollow fillers made of carbon black, clay, diatomaceous earth, silica, talc, barium sulfate, calcium carbonate, magnesium carbonate, metal oxides, mica, aluminum hydroxide, various metal powders, wood powders, glass powders, ceramic powders, glass balloons, or silica balloons; organic hollow fillers made of polystyrene, polyvinylidene fluoride, or polyvinylidene fluoride copolymers; and the like.

Examples of silica include dry process white carbon, wet process white carbon, colloidal silica, precipitated silica, and the like. Among these, preferred is wet process white carbon containing hydrous silicic acid as the main component. Further, a carbon-silica dual phase filler in which silica is carried on the surface of carbon black may also be used. These various kinds of silica may be used alone or in combination. The nitrogen-adsorbing specific surface area (measured by the BET-method according to ASTM D3037-81) of the silica to be used is preferably 100 to 400 m²/g, more preferably 150 to 350 m²/g. Further, the pH of the silica is preferably 5 to 10.

The amount of silica to be blended in the rubber composition according to the present invention is preferably 10 to 200 parts by mass, more preferably 20 to 150 parts by mass, further more preferably 30 to 75 parts by mass relative to 100 parts by mass of the rubber component in the rubber composition. By controlling the amount of silica within the above ranges, the rolling resistance, the wet grip performance, and the low-temperature performance of the rubber crosslinked product to be obtained can be further enhanced.

When silica is used as the filler, a silane coupling agent is preferably used in combination. Examples of the silane coupling agent include vinyltriethoxysilane, β-(3,4-epoxycyclohexyl)ethyltrimethoxysilane, N-(β-aminoethyl)-γ-aminopropyltrimethoxysilane, 3-octathio-1-propyl-triethoxysilane, bis(3-(triethoxysilyl)propyl)disulfide, bis(3-(triethoxysilyl)propyl)tetrasulfide, γ-trimethoxysilylpropyldimethylthiocarbamyl tetrasulfide, γ-trimethoxysilylpropylbenzothiazyl tetrasulfide, and the like. These silane coupling agents may be used alone or in combination. The amount of silane coupling agent is preferably 0.1 to 30 parts by mass, more preferably 1 to 15 parts by mass relative to 100 parts by mass of silica.

Examples of carbon black include furnace black, acetylene black, thermal black, channel black, graphite, and the like. These various kinds of carbon black may be used alone or in combination. The amount of carbon black is usually 120 parts by mass or less relative to 100 parts by mass of the rubber component in the rubber composition.

These fillers may be used alone or in combination. For example, as the filler, a mixture of silica and carbon black may be used.

The content of the filler other than silica and carbon black may be any content insofar as the effects of the present invention are ensured. For example, the content may be set to 120 parts by mass or less relative to 100 parts by mass of the rubber component in the rubber composition.

The crosslinking agent is not particularly limited, and examples thereof include sulfur, sulfur halides, organic peroxides, quinone dioximes, organic polyvalent amine compounds, alkylphenol resins having a methylol group, and the like. Among these, sulfur is preferably used. The amount of the crosslinking agent is preferably 0.1 to 15 parts by mass, more preferably 0.5 to 5 parts by mass, particularly preferably 1 to 4 parts by mass relative to 100 parts by mass of the rubber component in the rubber composition.

When sulfur or a sulfur-containing compound is used as the crosslinking agent, a crosslinking accelerator and a crosslinking activator are preferably used in combination. Examples of the crosslinking accelerator include sulfenamide-based crosslinking accelerators; guanidine-based crosslinking accelerators; thiourea-based crosslinking accelerators; thiazole-based crosslinking accelerators; thiuram-based crosslinking accelerators; dithiocarbamic acid-based crosslinking accelerators; xanthic acid-based crosslinking accelerators; and the like. Among these, preferred are those containing a sulfenamide-based crosslinking accelerator. These crosslinking accelerators are used alone or in combination. The amount of the crosslinking accelerator is preferably 0.1 to 15 parts by mass, more preferably 0.5 to 5 parts by mass, particularly preferably 1 to 4 parts by mass relative to 100 parts by mass of the rubber component in the rubber composition.

Examples of the crosslinking activator include higher fatty acids such as stearic acid; zinc oxide; and the like. These crosslinking activators are used alone or in combination. The amount of the crosslinking activator is preferably 0.05 to 20 parts by mass, particularly preferably 0.5 to 15 parts by mass relative to 100 parts by mass of the rubber component in the rubber composition.

Further, an anti-aging agent such as an amine-based stabilizer, a phenol-based stabilizer, a phosphorus-based stabilizer, or a sulfur-based stabilizer may be added to the rubber composition according to the present invention, if desired. The amount of the anti-aging agent to be added may be appropriately determined depending on the type and the like thereof.

In addition, an antioxidant may be added to the rubber composition according to the present invention, if necessary. Examples of antioxidants include, but not particularly limited to, hindered phenolic compounds such as pentaerythritol tetrakis[3-(3,5-di-t-butyl-4-hydroxyphenyl)propionate], octadecyl-3-(3,5-di-t-butyl-4-hydroxyphenyl)propionate, 2,6-di-t-butyl-p-cresol, and di-t-butyl-4-methylphenol; thiodicarboxylate esters such as dilauryltiopropionate; phosphites such as tris(nonylphenyl)phosphite; and the like. These antioxidants may be used alone or in combination. The content of the antioxidant is preferably, but not particularly limited to, 10 parts by mass or less, more preferably 0.05 to 5 parts by mass relative to 100 parts by mass of the rubber component in the rubber composition.

In addition, a resin other than the diene-based rubber and the hydrocarbon resin described above may be blended in the rubber composition according to the present invention. By incorporating the resin, it can impart tackiness to the rubber composition or enhance dispersibility of the filler in the rubber composition. As a result, further improvement can be expected in the rolling resistance, wet grip performance, and low-temperature performance of the rubber crosslinked product to be obtained. Further, an effect similar to that of the plasticizer, i.e., improving the processability of the rubber composition can be achieved. Examples of the resin include C9-based petroleum resin, dicyclopentadiene-based resin, terpene-based resin, terpene phenol resin, aromatic modified terpene resin, alkylphenol-acetylene resin, rosin-based resin, rosin ester resin, indene-based resin, C9-based resin containing indene, α-methylstyrene-indene copolymer resin, coumarone-indene resin, farnesene-based resin, polylimonene resin, and the like. These resins may be modified, or may be hydrogenated. These resins may be used alone or in combination. The amount of the resin is preferably 25 parts by mass or less relative to 100 parts by mass of the rubber component in the rubber composition.

In the method for producing the rubber composition according to the present invention, components may be kneaded according to a standard method. For example, components excluding thermally unstable components, such as a crosslinking agent and a crosslinking accelerator, the diene-based rubber, and the hydrocarbon resin may be kneaded, and then the thermally unstable components, such as a crosslinking agent and a crosslinking accelerator, may be kneaded into the kneaded product to obtain a target rubber composition. The kneading temperature at the time of kneading the components excluding the thermally unstable components, the diene-based rubber, and the hydrocarbon resin is preferably 80 to 200°C, more preferably 120 to 180°C, and the kneading time is preferably 30 seconds to 30 minutes. Further, the kneaded product is preferably cooled to 100°C or less, more preferably 80°C or less before it is kneaded with the thermally unstable components.

By using the rubber composition according to the present invention, a rubber crosslinked product can be obtained with an excellent balance of rolling resistance, wet grip performance, and low-temperature performance. With such characteristics, the rubber composition according to the present invention is preferably used for, for example, materials of tire parts such as treads (cap tread, base tread), carcass, sidewalls, and bead parts of tires, and in particular, can be suitably used for tire parts such as treads, carcass, sidewalls, and bead parts of various tires such as all season tires, high performance tires, and studless tires, and can be particularly suitably used for treads of tires, and in particular, is preferably used for cap treads.

### <Rubber crosslinked product>

The rubber crosslinked product according to the present invention is prepared by crosslinking the rubber composition according to the present invention described above.

The rubber crosslinked product according to the present invention can be produced from the rubber composition according to the present invention, for example, by performing molding, for example, with a molding machine corresponding to a desired shape, such as an extruder, an injection molding machine, a press, a roll, or the like, and performing a crosslinking reaction by heating to fix the shape as the rubber crosslinked product. In this case, the rubber composition may be preliminarily molded and then crosslinked, or may be molded and crosslinked at the same time. The molding temperature is usually 10 to 200°C, preferably 25 to 120°C. The crosslinking temperature is usually 100 to 200°C, preferably 130 to 190°C, and the crosslinking time is usually 1 minute to 24 hours, preferably 2 minutes to 12 hours, particularly preferably 3 minutes to 6 hours.

Depending on the shape, the size, and the like of the rubber crosslinked product, the inside of the rubber crosslinked product may not be sufficiently crosslinked even when the surface thereof is crosslinked. For this reason, the rubber crosslinked product may be further heated for secondary crosslinking.

As a heating method, a general method for use in crosslinking rubber compositions, such as press heating, steam heating, oven heating, hot air heating, or the like, may be appropriately selected.

Since the rubber crosslinked product according to the present invention thus obtained is produced from the rubber composition according to the present invention described above, the rubber crosslinked product has an excellent balance of rolling resistance, wet grip performance, and low-temperature performance.

By utilizing such an excellent rolling resistance, wet grip performance, and low-temperature performance, the rubber crosslinked product according to the present invention is preferably used for, for example, materials of tire parts such as treads (cap tread, base tread), carcass, sidewalls, and bead parts of tires, and in particular, can be suitably used for tire parts such as treads, carcass, sidewalls, and bead parts of various tires such as all season tires, high performance tires, and studless tires, and can be particularly suitably used for treads of tires, and in particular, is preferably used for cap treads.

Next, a pneumatic tire according to the present invention is described below. The pneumatic tire according to the present invention is characterized in that the rubber composition described above is used for a tread.

The tread described above is obtained from the rubber composition described above, that is, it is formed by using the rubber composition described above, and usually includes the rubber crosslinked product according to the present invention that is obtained by crosslinking the rubber composition according to the present invention described above.

The pneumatic tire described above may be any pneumatic tire having a tread formed from the rubber composition described above, and other parts thereof may also be formed from the rubber composition described above.

The tread formed from the rubber composition described above may be a part of a tread or the entire tread; however, the tread preferably includes at least a cap tread.

Further, as a method of producing the pneumatic tire according to the present invention, any known method for producing a pneumatic tire can be used insofar as the method is capable of producing a pneumatic tire having a tread formed from the composition described above.

### EXAMPLES

Hereinafter, the present invention will be more specifically described by way of Examples and Comparative Examples, but the present invention will not be limited only to these Examples. To be noted, "parts" and "%" are mass-based unless otherwise specified.

The following test methods were performed in Examples and Comparative Examples.

[Number average molecular weight (Mn), weight average molecular weight (Mw), Z-average molecular weight (Mz), peak-top molecular weight (Mp), molecular weight distribution (Mw/Mn, Mz/Mw), ratio (Mp/Mw) of peak-top molecular weight (Mp) to weight average molecular weight (Mw) of hydrocarbon resin]

The number average molecular weight (Mn), the weight average molecular weight (Mw), the Z-average molecular weight (Mz), and the peak-top molecular weight (Mp) of the hydrocarbon resin were determined polystyrene standards as a reference by gel permeation chromatography analysis, and based on the results, the molecular weight distribution (Mw/Mn, Mz/Mw) and the ratio (Mp/Mw) of the peak-top molecular weight (Mp) to the weight average molecular weight (Mw) were determined. The gel permeation chromatography analysis was performed at 40°C and a flow rate of 1.0 mL/min using "HLC-8320GPC" (available from Tosoh Corporation) as an analyzer, three "TSKgel SuperMultiporeHZ" columns connected (available from Tosoh Corporation), and tetrahydrofuran as a solvent.

### [Softening point of hydrocarbon resin]

The softening point of the hydrocarbon resin was measured according to JIS K6863.

### [Mooney viscosity (ML1+4) of rubber composition]

The Mooney viscosity (ML1+4) of the rubber composition was measured according to JIS K 6300-1:2001 under the following conditions. It can be regarded that, the smaller the value of Mooney viscosity, the superior the processability.
- Test temperature: 100°C
- Rotor type: L type
- Tester: Shimadzu Moony Viscometer SMV-300J, available from Shimadzu Corporation

### [Tensile stress (MPa) and elongation (%) of rubber crosslinked product]

A tensile stress (MPa) and an elongation (%) of a test piece of a rubber crosslinked product as a sample were measured under the following conditions according to JIS K 6251:2010. It can be regarded that, the larger the values, the superior the tensile stress and the elongation. Test piece preparation method: a sheet was prepared by press crosslinking and the sample was made by punching out the obtained sheet.
· Test piece shape: dumbbell-shaped No.3
· Test piece sampling direction: parallel to the grain
· Number of test pieces: 3
· Measurement temperature: 23°C
· Test speed: 500 mm/min
· Tester: TENSOMETER 10k (available from ALPHA TECHNOLOGIES)
· Tester capacity: loadcell type 1 kN

### [Storage modulus E' at -25°C]

A storage modulus E' of a test piece of a rubber crosslinked product as a sample at -25°C was measured under a dynamic strain of 0.5% and 10 Hz under the following measuring conditions according to JIS K 7244-4. This property was shown, for Example 1 and Comparative Examples 1 and 2, by an index based on Comparative Example 1 (reference sample) as 100, and, for Examples 2 to 4 and Comparative Examples 3 to 5, by an index based on Comparative Example 3 (reference sample) as 100. It can be regarded that, the lower the storage modulus E' at -25°C, the superior the low-temperature performance.
Measurement item: dynamic storage modulus E'
   • Sample preparation method: punched out from sheet
   • Test piece shape: length 50 mm × width 2 mm × thickness 2 mm
   · Number of test pieces: 1
   • Distance between clamps: 20mm

### [Loss tangent tanδ]

For a test piece of a rubber crosslinked product as a sample, a loss tangent tanδ at 0°C was measured under a dynamic strain of 0.5% and 10 Hz, and a loss tangent tanδ at 60°C was measured under a dynamic strain of 2.0% and 10 Hz, under the following measuring conditions according to JIS K 7244-4. This property was shown, for Example 1 and Comparative Examples 1 and 2, by an index based on Comparative Example 1 (reference sample) as 100, and, for Examples 2 to 4 and Comparative Examples 3 to 5, by an index based on Comparative Example 3 (reference sample) as 100. It can be regarded that, the higher the loss tangent tanδ at 0°C, the superior the wet grip performance, and that, the lower the loss tangent tanδ at 60°C, the superior the rolling resistance (the lower the loss tangent tanδ at 60°C, the lower the rolling resistance). Measurement items: dynamic storage modulus E'
: dynamic loss modulus E"
: loss tangent tanδ

· Sample preparation method: punched out from sheet
· Test piece shape: length 50 mm × width 2 mm × thickness 2 mm
· Number of test pieces: 1
· Distance between clamps: 20mm

### [Example 1]

### (Preparation of hydrocarbon resin)

52.7 Parts of cyclopentane as a hydrocarbon solvent was placed into a polymerization reactor, followed by heating to 70°C. Thereafter, 1.0 part of aluminum chloride as a polymerization catalyst was added. While the temperature (70°C) was being maintained, the mixture was mixed for 2 minutes so that the aluminum chloride was dispersed in the cyclopentane in such a way that some aggregation remained. Subsequently, after the 2-minute mixing, polymerization was performed by continuously adding a mixture of 48.2 parts of 1,3-pentadiene, 0.3 parts of isoprene, 17.0 parts of cyclopentene, 33.0 parts of isobutylene, 1.0 part of diisobutylene, 0.3 parts of dicyclopentadiene, 0.2 parts of C₄-C₆ unsaturated hydrocarbon, 15.8 parts of C₄-C₆ saturated hydrocarbon, and 0.1 parts of toluene thereto in the polymerization reactor over 60 minutes while maintaining the temperature (70°C). Thereafter, a sodium hydroxide aqueous solution was added to the polymerization reactor to terminate the polymerization reaction. The types and amounts of the components in the polymerization reactor during the polymerization reaction are summarized in Table 1. The precipitate generated by the termination of polymerization was removed by filtration to prepare a polymer solution containing a hydrocarbon resin and unreacted monomers and the like. The polymer solution was then placed into a distillation still, followed by heating under a nitrogen atmosphere to remove the polymerization solvent and unreacted monomers, thereby yielding a hydrocarbon resin. Since the amount of unreacted monomers was extremely small, it can be regarded that the monomer composition constituting the resulting hydrocarbon resin is almost the same as the monomer composition used for the polymerization (the same applies to Examples 2 to 4 and Comparative Examples 1 to 5 described later). Then, the number average molecular weight (Mn), the weight average molecular weight (Mw), the Z-average molecular weight (Mz), the peak-top molecular weight (Mp), the molecular weight distribution (Mw/Mn, Mz/Mw), the ratio (Mp/Mw) of the peak-top molecular weight (Mp) to the weight average molecular weight (Mw), and the softening point of the resulting hydrocarbon resin were measured. Table 1 shows the results.

### (Preparation of rubber composition)

In a Banbury mixer, 100 parts of a solution-polymerized styrene-butadiene rubber (SBR) (trade name "Nipol NS612", available from ZS Elastomers Co., Ltd., styrene monomer unit content: 15% by weight, vinyl bond content in butadiene unit moiety: 30%, Mooney viscosity (ML1+4, 100°C): 62, glass transition temperature (Tg): -65°C, free of extender oil) was masticated for 30 seconds, and then 46.6 parts of silica (available from Tosoh Silica Corporation, trade name "Nipsil AQ"), 5 parts of carbon black (available from Cabot Japan K.K., trade name "N339"), 6 parts of a silane coupling agent: bis(3-(triethoxysilyl)propyl)tetrasulfide (available from Degussa AG, trade name "Si69"), and 20 parts of the hydrocarbon resin obtained above were added and kneaded for 90 seconds. Then, 23.4 parts of silica (available from Rhodia, trade name "Zeosil1165MP"), 3 parts of zinc oxide, 2 parts of stearic acid, 2 parts of an anti-aging agent: N-phenyl-N'-(1,3-dimethylbutyl)-p-phenylenediamine (available from Ouchi Shinko Chemical Industrial Co., Ltd., trade name "Nocrac 6C") were added and further kneaded for 90 seconds. Then, 10 parts of process oil (available from Nippon Oil Corporation, trade name "Aromax T-DAE") was added. The mixture was then kneaded (primary kneading) at 145 to 155°C (started from 90°C) for 60 seconds or more, and then the kneaded article was discharged from the mixer.

The obtained kneaded article was cooled to room temperature, and then kneaded (secondary kneading) again in a Banbury mixer for 2 minutes at a temperature starting from 90°C, and then the kneaded article was discharged from the mixer. The temperature of the kneaded article at the end of kneading was 145°C.

Then, using two rolls at a temperature of 50°C, 1.7 parts of sulfur, 1.8 parts of a crosslinking accelerator: N-cyclohexyl-2-benzothiazolylsulfenamide (CBS, trade name "Nocceler CZ-G", available from Ouchi Shinko Chemical Industrial Co., Ltd.), and 1.7 parts of diphenylguanidine (DPG, trade name "Nocceler D", available from Ouchi Shinko Chemical Industrial Co., Ltd.) were added to the obtained kneaded article, and they were kneaded (crosslinking agent-mixed kneading), and then a sheet shaped rubber composition was taken out. The Mooney viscosity (ML1+4) of the obtained rubber composition was measured. Table 2 shows the results.

The kneading conditions in the primary kneading, the secondary kneading, and the crosslinking agent-mixed kneading were as follows.

### (Kneading conditions in primary kneading and secondary kneading)

• Tester: Labo plastomill, Banbury mixer B-600, available from Toyo Seiki Kogyo Co., Ltd.
• Filling ratio: 70 to 75 vol%
· Rotor revolution: 50 rpm
• Test starting temperature: 90°C

### (Kneading conditions in crosslinking agent-mixed kneading)

· Tester: Electric heating type high-temperature rolling machine, available from Ikedakikaikogyo Co., Ltd.
· Roll size: 6ϕ × 16
· Front roll revolution: 24 rpm
· Rotation ratio of front roll to back roll: 1:1.22
· Roll temperature: 50 ± 5°C
· Number of times of cutting: left twice and right twice
· Width for rounding (*Marume-doshi*): roll gap of about 0.8 mm
· Number of times of rounding (*Marume-doshi*): 5 times

### (Preparation of rubber crosslinked product)

The rubber composition obtained above was subjected to press crosslinking at a press pressure of about 8 MPa and a press temperature of 160°C for 40 minutes, and then further aged in a constant temperature room at 23°C overnight to prepare a test piece of a rubber crosslinked product of 150 mm × 150 mm × 2 mm in thickness. The tensile stress (MPa), the elongation (%), the storage modulus E' at -25°C, and the loss tangent tanδ (0°C, 60°C) of the obtained rubber crosslinked product were measured. Table 2 shows the results.

### [Comparative Examples 1 and 2]

### (Preparation of hydrocarbon resin)

Hydrocarbon resins of Comparative Examples 1 and 2 were obtained in the same manner as in Example 1 except that the types and the amounts of the components added to the polymerization reactor, the mixing temperature and the mixing time upon mixing of aluminum chloride as a polymerization catalyst, and the polymerization temperature were changed as shown in Table 1 below. The obtained hydrocarbon resins were subjected to measurement in the same manner as in Example 1. Table 1 shows the results.

### (Preparation of rubber composition and rubber crosslinked product)

Rubber compositions and rubber crosslinked products were obtained in the same manner as in Example 1 except that the hydrocarbon resins obtained above were used, and were subjected to measurement in the same manner. Table 2 shows the results.

### [Table 1]

**Table 1**

| | | Example | Comparative Example | |
|---|---|---|---|---|
| | | 1 | 1 | 2 |
| Monomer materials of hydrocarbon resin (parts) | | | | |
| 1,3-Pentadiene | | 48.2 | 43.6 | 44.8 |
| Isoprene | | 0.3 | - | 0.3 |
| C₄-C₆ alicyclic monoolefin | Cyclopentene | 17.0 | 24.3 | 24.2 |
| C₄-C₈ acyclic monoolefins | Isobutylene | 33.0 | 30.3 | 30.3 |
| | Diisobutylene | 1.0 | 1.4 | - |
| Alicyclic Diolefin | Dicyclopentadiene | 0.3 | 0.1 | 0.1 |
| Other monomers | C₄-C₆ unsaturated hydrocarbon | 0.2 | 0.3 | 0.3 |
| Aromatic monomers | C9 fraction | - | - | - |
| | Styrene | - | - | - |
| Total parts of monomer mixture | | 100.0 | 100.0 | 100.0 |

| Polymerization conditions | | | | |
|---|---|---|---|---|
| Solvent composition (parts) | C₄-C₆ saturated hydrocarbon | 15.8 | 15.8 | 15.8 |
| | Cyclopentane | 52.7 | 52.7 | 52.7 |
| | Toluene | 0.1 | 0.1 | 0.1 |
| Polymerization catalyst (parts) | Aluminum chloride | 1.0 | 1.0 | 0.6 |
| Mixing time of polymerization catalyst in cyclopentane (min) | | 2 | 10 | 8 |
| Mixing temperature of polymerization catalyst in cyclopentane (°C) | | 70 | 60 | 60 |
| Polymerization temperature (°C) | | 70 | 60 | 60 |

| Properties of hydrocarbon resin | | | | |
|---|---|---|---|---|
| Softening point (°C) | | 94 | 93 | 94 |
| Number average molecular weight (Mn) | | 940 | 1100 | 1120 |
| Weight average molecular weight (Mw) | | 1810 | 1820 | 1800 |
| Z-average molecular weight (Mz) | | 3530 | 3150 | 3160 |
| Peak-top molecular weight | | 1130 | 1500 | 1650 |
| Molecular weight distribution (Mw/Mn) | | 1.9 | 1.7 | 1.6 |
| Molecular weight distribution (Mz/Mw) | | 2.0 | 1.7 | 1.8 |
| Peak-top molecular weight/weight average molecular weight | | 0.62 | 0.82 | 0.92 |

### [Table 2]

**Table 2**

| | | Example | Comparative Example | |
|---|---|---|---|---|
| | | 1 | 1 | 2 |
| Formulation of rubber composition (parts) | | | | |
| SBR (Nipol NS612) | | 100 | 100 | 100 |
| Hydrocarbon resin | | 20 | 20 | 20 |
| Silica | | 70 | 70 | 70 |
| Carbon black | | 5 | 5 | 5 |
| Silane coupling agent | | 6 | 6 | 6 |
| Zinc oxide | | 3 | 3 | 3 |
| Stearic acid | | 2 | 2 | 2 |
| Anti-aging agent | | 2 | 2 | 2 |
| Process oil | | 10 | 10 | 10 |
| Sulfur | | 1.7 | 1.7 | 1.7 |
| Vulcanization accelerators | CBS | 1.8 | 1.8 | 1.8 |
| | DPG | 1.7 | 1.7 | 1.7 |

| Properties of rubber composition | | | | |
|---|---|---|---|---|
| Mooney viscosity, 100°C, ML1+4 | | 95 | 97 | 97 |

| Properties of rubber crosslinked product | | | | |
|---|---|---|---|---|
| Tensile stress (MPa) | | 19.5 | 19.8 | 19.9 |
| Elongation (%) | | 430 | 440 | 440 |
| Storage modulus E' at -25°C (index) | | 91 | 100 | 103 |
| Loss tangent tan δ (0°C) (index) | | 107 | 100 | 96 |
| Loss tangent tan δ (60°C) (index) | | 102 | 100 | 96 |

### [Examples 2 to 4]

### (Preparation of hydrocarbon resin)

Hydrocarbon resins of Examples 2 to 4 were obtained in the same manner as in Example 1 except that the types and the amounts of the components added to the polymerization reactor, the mixing temperature and the mixing time upon mixing of aluminum chloride as a polymerization catalyst, and the polymerization temperature were changed as shown in Table 3 below. The C9 fraction and styrene, which were not used in Example 1, were mixed together with 1,3-pentadiene and the like, and were subjected to polymerization. The C9 fraction mainly contained styrene, α-methylstyrene, β-methylstyrene, vinyltoluene, and indene as aromatic monomers. Table 3 shows the amount thereof on the aromatic monomer basis. The obtained hydrocarbon resins were subjected to measurement in the same manner as in Example 1. Table 3 shows the results.

### (Preparation of rubber composition and rubber crosslinked product)

Rubber compositions and rubber crosslinked products were obtained in the same manner as in Example 1 except that the hydrocarbon resins obtained above were used, and were subjected to measurement in the same manner. Table 4 shows the results.

### [Comparative Examples 3 to 5]

### (Preparation of hydrocarbon resin)

Hydrocarbon resins of Comparative Examples 3 to 5 were obtained in the same manner as in Example 1 except that the types and the amounts of the components added to the polymerization reactor, the mixing temperature and the mixing time upon mixing of aluminum chloride as a polymerization catalyst, and the polymerization temperature were changed as shown in Table 3 below. The C9 fraction and styrene, which were not used in Example 1, were mixed together with 1,3-pentadiene and the like, and were subjected to polymerization. The C9 fraction mainly contained styrene, α-methylstyrene, β-methylstyrene, vinyltoluene, and indene as aromatic monomers. Table 3 shows the amount thereof on the aromatic monomer basis. The obtained hydrocarbon resins were subjected to measurement in the same manner as in Example 1. Table 3 shows the results.

### (Preparation of rubber composition and rubber crosslinked product)

Rubber compositions and rubber crosslinked products were obtained in the same manner as in Example 1 except that the hydrocarbon resins obtained above were used, and were subjected to measurement in the same manner. Table 4 shows the results.

### [Table 3]

**Table 3**

| | | Example | | | Comparative Example | | |
|---|---|---|---|---|---|---|---|
| | | 2 | 3 | 4 | 3 | 4 | 5 |
| Monomer materials of hydrocarbon resin (parts) | | | | | | | |
| 1,3-Pentadiene | | 41.6 | 35.3 | 41.0 | 40.8 | 30.7 | 42.5 |
| Isoprene | | - | 7.4 | 0.3 | - | 11.4 | 0.2 |
| C₄-C₈ alicyclic monoolefin | Cyclopentene | 17.1 | 14.8 | 16.8 | 20.1 | 18.1 | 21.1 |
| C₄-C₈ acyclic monoolefins | Isobutylene | 14.5 | 15.7 | 16.5 | 12.5 | 10.4 | 11.5 |
| | Diisobutylene | 0.4 | 0.4 | 0.5 | 0.8 | 0.6 | 0.3 |
| Alicyclic Diolefin | Dicyclopentadiene | 2.0 | 2.0 | 0.1 | 1.4 | 4.5 | - |
| Other monomers | C₄-C₈ unsaturated hydrocarbon | 0.4 | 0.4 | 0.8 | 0.4 | 0.3 | 0.4 |
| Aromatic monomers | C9 fraction | 24.0 | 240 | - | 24.0 | 24.0 | - |
| | Styrene | - | - | 24.0 | - | - | 24.0 |
| Total parts of monomer mixture | | 100.0 | 100.0 | 100.0 | 100.0 | 100.0 | 100.0 |

| Polymerization conditions | | | | | | | |
|---|---|---|---|---|---|---|---|
| Solvent composition (parts) | C₄-C₈ saturated hydrocarbon | 15.8 | 15.8 | 15.8 | 15.8 | 15.8 | 15.8 |
| | Cyclopentane | 52.7 | 52.7 | 52.7 | 52.7 | 52.7 | 52.7 |
| | Toluene | 0.1 | 0.1 | 0.1 | 0.1 | 0.1 | 0.1 |
| Polymerization catalyst (parts) | Aluminum chloride | 1.0 | 1.0 | 1.0 | 0.6 | 0.6 | 0.7 |
| Mixing time of polymerization catalyst in cyclopentane (min) | | 2 | 2 | 2 | 8 | 2 | 8 |
| Mixing temperature of polymerization catalyst in cyclopentane (°C) | | 70 | 70 | 65 | 45 | 70 | 50 |
| Polymerization temperature (°C) | | 70 | 70 | 65 | 45 | 70 | 50 |

| Properties of hydrocarbon resin | | | | | | | |
|---|---|---|---|---|---|---|---|
| Softening point (°C) | | 99 | 101 | 96 | 98 | 104 | 95 |
| Number average molecular weight (Mn) | | 990 | 1000 | 930 | 1100 | 1130 | 1080 |
| Weight average molecular weight (Mw) | | 2260 | 2370 | 2110 | 2080 | 2290 | 1970 |
| Z-average molecular weight (Mz) | | 4980 | 5450 | 3880 | 4360 | 13360 | 4140 |
| Peak-top molecular weight | | 1440 | 1400 | 1150 | 1690 | 1550 | 1590 |
| Molecular weight distribution (Mw/Mn) | | 2.3 | 2.4 | 2.3 | 1.9 | 20 | 1.8 |
| Molecular weight distribution (Mz/Mw) | | 2.2 | 2.3 | 1.8 | 2.1 | 5.8 | 2.1 |
| Peak-top molecular weight/weight average molecular weight | | 0.64 | 0.59 | 0.55 | 0.81 | 0.68 | 0.81 |

### [Table 4]

**Table 4**

| | | Example | | | Comparative Example | | |
|---|---|---|---|---|---|---|---|
| | | 2 | 3 | 4 | 3 | 4 | 5 |
| Formulation of rubber composition (parts) | | | | | | | |
| SBR (Nipol NS612) | | 100 | 100 | 100 | 100 | 100 | 100 |
| Hydrocarbon resin | | 20 | 20 | 20 | 20 | 20 | 20 |
| Silica | | 70 | 70 | 70 | 70 | 70 | 70 |
| Carbon black | | 5 | 5 | 5 | 5 | 5 | 5 |
| Silane coupling agent | | 6 | 6 | 6 | 6 | 6 | 6 |
| Zinc oxide | | 3 | 3 | 3 | 3 | 3 | 3 |
| Stearic acid | | 2 | 2 | 2 | 2 | 2 | 2 |
| Anti-aging agent | | 2 | 2 | 2 | 2 | 2 | 2 |
| Process oil | | 10 | 10 | 10 | 10 | 10 | 10 |
| Sulfur | | 1.7 | 1.7 | 1.7 | 1.7 | 1.7 | 1.7 |
| Vulcanization accelerators | CBS | 1.8 | 1.8 | 1.8 | 1.8 | 1.8 | 1.8 |
| | DPG | 1.7 | 1.7 | 1.7 | 1.7 | 1.7 | 1.7 |

| Properties of rubber composition | | | | | | | |
|---|---|---|---|---|---|---|---|
| Mooney viscosity, 100°C, ML1+4 | | 96 | 97 | 96 | 98 | 100 | 98 |

| Properties of rubber crosslinked product | | | | | | | |
|---|---|---|---|---|---|---|---|
| Tensile stress (MPa) | | 19.7 | 19.6 | 19.5 | 19.8 | 20.5 | 19.5 |
| Elongation (%) | | 450 | 450 | 440 | 430 | 440 | 460 |
| Storage modulus E' at -25°C (index) | | 89 | 88 | 91 | 100 | 94 | 103 |
| Loss tangent tan δ (0°C) (index) | | 111 | 119 | 115 | 100 | 115 | 104 |
| Loss tangent tan δ (60°C) (index) | | 100 | 100 | 100 | 100 | 113 | 97 |

The results of Example 1 and Comparative Examples 1 and 2 shown in Tables 1 and 2 and the results of Examples 2 to 4 and Comparative Examples 3 to 5 shown in Tables 3 and 4 revealed that rubber crosslinked products obtained by using the rubber compositions each containing a hydrocarbon resin in which all of the number average molecular weight (Mn), the weight average molecular weight (Mw), the Z-average molecular weight (Mz), the ratio (Mw/Mn) of the weight average molecular weight to the number average molecular weight, the ratio (Mz/Mw) of the Z-average molecular weight to the weight average molecular weight, and the softening point were within the predetermined ranges of the present invention and in which the ratio (Mp/Mw) of the peak-top molecular weight (Mp) to the weight average molecular weight (Mw) was within the range of 0.4 to 0.8 had a low storage modulus E' at -25°C, an excellent low-temperature performance, a high loss tangent tanδ at 0°C, an excellent wet grip performance, a low loss tangent tanδ at 60°C, and a low rolling resistance. Thus, the rubber crosslinked products obtained from the rubber compositions each containing such a hydrocarbon resin had an excellent balance of low-temperature performance, wet grip performance, and rolling resistance (Examples 1 to 4) .

On the other hand, when the hydrocarbon resins in which the ratio (Mp/Mw) of the peak-top molecular weight (Mp) to the weight average molecular weight (Mw) was higher than 0.8 were used, the resulting rubber crosslinked products had a high storage modulus E' at -25°C, an inferior low-temperature performance, a low loss tangent tanδ at 0°C, and an inferior wet grip performance (Comparative Examples 1 to 3, and 5) .

Further, when the hydrocarbon resin with an excessively high ratio (Mz/Mw) of the Z-average molecular weight to the weight average molecular weight was used, the resulting rubber crosslinked product had a low loss tangent tanδ at -0°C, an inferior wet grip performance, a high loss tangent tanδ at 60°C, and a high rolling resistance (Comparative Example 4).

## Claims

1. A rubber composition comprising a diene-based rubber and a hydrocarbon resin,
wherein the content of the hydrocarbon resin is 1 to 200 parts by mass relative to 100 parts by mass of the diene-based rubber,
wherein the hydrocarbon resin comprises aliphatic monomer units, or aliphatic monomer units and aromatic monomer units, and has
a number average molecular weight (Mn) in the range of 400 to 3000,
a weight average molecular weight (Mw) in the range of 700 to 6000,
a Z-average molecular weight (Mz) in the range of 1500 to 20000,
a ratio (Mw/Mn) of the weight average molecular weight to the number average molecular weight in the range of 1.0 to 4.0,
a ratio (Mz/Mw) of the Z-average molecular weight to the weight average molecular weight in the range of 1.0 to 3.5,
a ratio (Mp/Mw) of a peak-top molecular weight (Mp) to the weight average molecular weight (Mw) in the range of 0.4 to 0.8, and
a softening temperature in the range of 80 to 150°C.

2. The rubber composition according to claim 1, wherein the hydrocarbon resin comprises
1 to 70% by mass of 1,3-pentadiene monomer units,
1 to 30% by mass of C₄ to C₆ alicyclic monoolefin monomer units,
0 to 15% by mass of isoprene monomer units,
0 to 50% by mass of C₄ to C₈ acyclic monoolefin monomer units,
0 to 10% by mass of alicyclic diolefin monomer units, and
0 to 40% by mass of aromatic monoolefin monomer units.

3. The rubber composition according to claim 1 or 2, wherein the hydrocarbon resin is a hydride.

4. The rubber composition according to any one of claims 1 to 3, further comprising a filler.

5. The rubber composition according to any one of claims 1 to 4, further comprising a crosslinking agent.

6. The rubber composition according to any one of claims 1 to 5, which comprises a styrene-butadiene copolymer rubber or a butadiene rubber as the diene-based rubber.

7. A rubber crosslinked product formed by crosslinking the rubber composition according to any one of claims 1 to 6.

8. A pneumatic tire comprising a tread formed from the rubber composition according to any one of claims 1 to 6 or the rubber crosslinked product according to claim 6.
